(19) Europäisches Patentamt / European Patent Office / Office européen des brevets

(11) **EP 4 456 454 A1**

(12) **DEMANDE DE BREVET EUROPEEN**

(43) Date de publication:
**30.10.2024 Bulletin 2024/44**

(21) Numéro de dépôt: **24167265.8**

(22) Date de dépôt: **28.03.2024**

(51) Classification Internationale des Brevets (IPC):
**H04B 17/20** *(2015.01)* **H04B 17/26** *(2015.01)*
**H04B 17/336** *(2015.01)* **H04W 16/18** *(2009.01)*
**H04W 24/02** *(2009.01)* **H04W 24/08** *(2009.01)*

(52) Classification Coopérative des Brevets (CPC):
**H04B 17/252; H04B 17/26; H04B 17/336; H04W 16/18;** H04W 24/08

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **28.04.2023 FR 2304341**

(71) Demandeur: **Orange**
**92130 Issy-les-Moulineaux (FR)**

(72) Inventeurs:
• **HADJ KACEM, Imed**
**92326 Châtillon (FR)**
• **BEN JEMAA, Sana**
**92326 Châtillon (FR)**

(74) Mandataire: **Vidon Brevets & Stratégie**
**16B, rue de Jouanet**
**BP 90333**
**35703 Rennes Cedex 7 (FR)**

(54) **ESTIMATION DE PARAMÈTRES CARACTÉRISTIQUES D'UNE QUALITÉ DE RÉCEPTION EN UNE LOCALISATION D'UN RÉSEAU DE RADIOCOMMUNICATION CELLULAIRE À PARTIR D'UNE APPROXIMATION DES COEFFICIENTS DE CORRÉLATION**

(57) L'invention concerne un procédé d'estimation de paramètres caractéristiques d'une qualité de réception en une localisation d'un réseau de radiocommunication cellulaire. Ce procédé comprend:
- une sélection parmi un ensemble de cellules du réseau, d'au moins deux cellules offrant des puissances moyennes de réception d'un signal utile à la localisation les plus élevées ;
- une détermination, à l'échelle logarithmique, d'au moins deux rapports signal sur interférence plus bruit à la localisation pour le signal utile reçu en provenance de chacune desdites au moins deux cellules sélectionnées ;
- une détermination d'un coefficient de corrélation entre lesdits au moins deux rapports signal sur interférence plus bruit déterminés à l'échelle logarithmique,
- une détermination d'un maximum entre lesdits au moins deux rapports signal sur interférence plus bruit déterminés à l'échelle logarithmique;
- une estimation des paramètres caractéristiques d'une qualité de réception à ladite localisation à partir dudit maximum et dudit coefficient de corrélation.

[Fig.3]

Fig. 3

**Description**

**Domaine technique**

Le domaine de l'invention est celui des radiocommunications cellulaires, par exemple dans des réseaux de communication cellulaires de type 3G, 4G, 5G ou plus. Plus précisément, l'invention concerne l'estimation de paramètres caractéristiques d'une qualité de réception d'un signal utile, en tous points de tels réseaux, à des fins par exemple de planification ou d'optimisation des ressources du réseau, ou encore de surveillance de ses performances.

**Art antérieur**

Les réseaux de radiocommunication cellulaires sont classiquement structurés en cellules voisines, dont chacune est équipée d'une ou plusieurs stations de base embarquant chacune une pluralité d'antennes émettrices. Les cellules forment un pavage d'une zone géographique, et un objectif de l'opérateur du réseau de radiocommunication est d'assurer une couverture radio, pour ses usagers, sur l'ensemble de la zone géographique considérée, i.e. d'assurer un accès aux services qu'il propose en tout point de cette zone géographique, en évitant autant que faire se peut l'apparition de zones blanches.

Dans un environnement radio de type 3G (ou réseau de communications radio de troisième génération, également appelé UMTS pour l'anglais « *Universal Mobile Télécommunications System* », en français « système de télécommunication mobile universel »), 4G (ou réseau de communications radio de quatrième génération, également appelé LTE pour l'anglais « *Long Term Evolution* ») et 5G (ou réseau de communications radio de cinquième génération), les antennes émettrices des cellules voisines émettent des signaux utiles dans la même bande de fréquences. A un instant donné, chaque terminal utilisateur est rattaché à l'une des cellules du réseau, que l'on appelle couramment cellule serveuse, et de laquelle il reçoit le signal utile dont il a besoin.

Cependant, en plus du signal utile envoyé par sa cellule serveuse, un terminal utilisateur reçoit également des signaux d'interférence en provenance des autres cellules dans la zone de couverture desquelles il se trouve. La capacité du terminal utilisateur à décoder correctement le signal qui lui est destiné dépend de la puissance de réception du signal utile et des interférences, et plus particulièrement du rapport de ces deux quantités. La métrique « SINR » (en anglais « *Signal to Noise plus interférence ratio* » ; en français « rapport signal sur interférences plus bruit »), est le rapport de la puissance du signal utile divisé par la somme des puissances des signaux interférents et du bruit thermique, reçus au niveau du récepteur du terminal utilisateur. Si le terminal utilisateur est capable de décoder correctement le signal utile qui lui est destiné pour un service donné, alors ce service est accessible avec une qualité suffisante à l'emplacement du terminal.

On peut donc définir la zone de couverture pour ce service comme l'ensemble des emplacements, au sein de la cellule, où le SINR reçu est supérieur à un seuil donné. L'opérateur dimensionne et paramètre son réseau selon ses objectifs incluant la couverture, par exemple 99% du territoire doit être couvert pour le service voix, 95% pour le service vidéo etc. Comme la couverture ne peut pas être mesurée en tout emplacement du réseau, l'estimation précise du SINR et de ses paramètres caractéristiques est déterminante pour assurer les objectifs de couverture de l'opérateur.

Cependant, le signal transmis par une station de base et reçu par un terminal utilisateur est sujet à des variations liées à la nature de l'environnement radio. En effet, les puissances de réception au niveau de deux terminaux utilisateurs situés à la même distance de la station de base sont différentes du fait que les obstacles existants sur les trajets entre chaque terminal utilisateur et la station de base sont différents (phénomènes de réflexion sur les obstacles importants, tels que les immeubles en milieu urbain ou les forêts en milieu rural par exemple). On parle dans ce cas du phénomène aléatoire du « shadowing » qui rajoute un terme d'affaiblissement dans l'expression de la puissance du signal radio reçu par le terminal utilisateur.

Comme indiqué précédemment, dans un réseau de radiocommunication cellulaire, un terminal utilisateur est typiquement rattaché à la cellule lui offrant une puissance en réception la plus élevée, que l'on appelle couramment sa cellule serveuse. Pour estimer la couverture offerte en chaque localisation du réseau de radiocommunication, il est donc tout d'abord nécessaire de déterminer quelle est la cellule serveuse en cette localisation, puis les cellules interférentes, et ensuite d'estimer le SINR associé. Néanmoins, en l'absence de mesures et en raison de la variation aléatoire des puissances des signaux reçus à une localisation donnée (phénomène de « shadowing »), l'identité de la cellule serveuse n'est pas toujours connue de manière déterministe, et elle peut varier statistiquement, surtout en bordure de cellules.

Cependant, à des fins de simplification, les travaux précédemment publiés sur ce sujet reposent sur l'hypothèse qu'en une localisation donnée du réseau, la cellule serveuse est « figée », et correspond par exemple à la cellule dont est reçu le signal utile présentant la puissance moyenne de réception la plus élevée pour le terminal utilisateur.

Ainsi, dans l'article **"SINR and rate distributions for downlink cellular networks"**, IEEE Transactions on UVireless Communications, vol. 19, no. 7, pp. 4604-4616, 2020, publié par les inventeurs de la présente demande de brevet, les auteurs proposent d'évaluer la qualité de service perçue par un terminal utilisateur à partir de la distribution statistique du rapport SINR, qui est approximée sous la forme d'une variable aléatoire normale dans le domaine logarithmique, dont on peut calculer la moyenne et la variance. Ces travaux reposent sur l'hypothèse simplificatrice qu'en une localisation donnée du réseau, un terminal utilisateur reçoit un signal utile d'une cellule serveuse k figée, et M signaux interférents en provenance de M cellules voisines. Le SINR en cette localisation est alors défini comme le rapport de la puissance du signal utile reçu depuis cette cellule serveuse k sur la somme de la puissance du bruit thermique et des puissances des signaux interférents reçus depuis les M cellules voisines.

Dans l'article, **"Downlink average rate and SINR distribution in cellular networks,"** IEEE Transactions on Communications, vol. 64, no. 2, pp. 847-862, Feb. 2016, X. Yan et al. s'intéressent plus particulièrement aux réseaux cellulaires reposant sur une technique de multiplexage de type OFDMA (pour l'anglais « *Orthogonal Frequency Division Multiple Access* », en français « accès multiple par répartition orthogonale de la fréquence »), et proposent une autre approche pour la modélisation statistique du rapport SINR. Leurs travaux reposent également sur l'hypothèse simplificatrice qu'en une localisation donnée ($r$, $\theta$) du réseau, un terminal utilisateur reçoit un signal utile d'une station de base $BS_0$ d'une cellule serveuse figée, et L signaux interférents en provenance des stations de base $BS_i$ de i cellules voisines interférentes.

Dans chacune de ces deux publications, les paramètres caractéristiques proposés pour estimer la distribution du SINR ne sont valides que si la cellule serveuse d'un terminal utilisateur reste effectivement inchangée Or, dans un environnement réel, dans lequel le phénomène aléatoire de « shadowing » vient s'ajouter à la puissance moyenne du signal reçu par un terminal utilisateur, il est fréquent que plusieurs cellules proches s'échangent statistiquement le rôle de cellule serveuse, en une localisation donnée du réseau.

Ainsi, l'approximation sur laquelle reposent ces deux articles de l'art antérieur est satisfaisante quand l'écart entre la puissance moyenne du signal reçu depuis une première cellule présentant la valeur la plus élevée et la puissance moyenne du signal reçu depuis une deuxième cellule présentant la deuxième valeur la plus élevée est assez important, typiquement pour des terminaux utilisateurs proches du centre de la cellule. Elle atteint cependant ses limites de validité pour des terminaux utilisateurs en bordure de cellules. Or, il est à noter que la zone en bordure de cellules est la zone où il est important, pour l'opérateur du réseau, de connaître avec précision le SINR afin de garantir la couverture.

Il existe donc un besoin d'une technique d'estimation de paramètres caractéristiques d'une qualité de réception en une localisation d'un réseau de radiocommunication cellulaire qui vienne améliorer ces travaux de l'art antérieur. Notamment, il existe un besoin d'une telle technique qui vienne améliorer l'estimation de la qualité de signal reçue en tout point d'un réseau de radiocommunication cellulaire, et notamment, mais non exclusivement, dans les localisations en bordure de cellules.

Il existe encore un besoin d'une telle technique qui permette d'améliorer l'estimation de caractéristiques du rapport SINR, à des fins notamment de planification, d'optimisation de couverture radio ou encore de surveillance des performances d'un réseau de radiocommunication cellulaire.

## Exposé de l'invention

L'invention répond à ce besoin en proposant un procédé d'estimation de paramètres caractéristiques d'une qualité de réception en une localisation d'un réseau de radiocommunication cellulaire. Ce procédé comprend:

- une sélection parmi un ensemble de cellules du réseau, d'au moins deux cellules offrant des puissances moyennes de réception d'un signal utile à la localisation les plus élevées ;
- une détermination, à l'échelle logarithmique, d'au moins deux rapports signal sur interférence plus bruit à la localisation pour le signal utile reçu en provenance de chacune desdites au moins deux cellules sélectionnées ;
- une détermination d'un coefficient de corrélation entre lesdits au moins deux rapports signal sur interférence plus bruit déterminés à l'échelle logarithmique,
- une détermination d'un maximum entre lesdits au moins deux rapports signal sur interférence plus bruit déterminés à l'échelle logarithmique;
- une estimation des paramètres caractéristiques d'une qualité de réception à ladite localisation à partir dudit maximum et dudit coefficient de corrélation.

Ainsi, l'invention repose sur une approche tout à fait nouvelle et inventive de l'estimation de la qualité de réception en tout point d'un réseau, à des fins par exemple de planification du réseau, d'optimisation d'un réseau de radiocommunication cellulaire existant, ou encore de surveillance des performances d'un réseau. En effet, les techniques de l'art antérieur en matière d'estimation de la qualité de réception reposent toutes sur l'hypothèse qu'en une localisation donnée du réseau, il existe une unique cellule serveuse, figée au cours du temps, à laquelle un terminal utilisateur est attaché. C'est l'hypothèse sur laquelle sont fondées les propositions des articles précités **"SINR and rate distributions for downlink cellular networks"**, IEEE Transactions on Wireless Communications, vol. 19, no. 7, pp. 4604-4616, 2020**,** publié par les inventeurs de la présente demande de brevet et **"Downlink average rate and SINR distribution in cellular**

networks," IEEE Transactions on Communications, vol. 64, no. 2, pp. 847-862, Feb. 2016, de X. Yan et al.

Contrairement à ces travaux antérieurs, la technique d'estimation selon un mode de réalisation de l'invention considère le cas réaliste où le rôle de serveuse peut être statistiquement joué par plusieurs cellules voisines, ce qui s'avère particulièrement fréquent dans le cas où le terminal utilisateur est localisé en bordure de cellule, en raison du caractère aléatoire du phénomène de « Shadowing ». La présente solution s'attache ainsi à identifier deux ou plusieurs cellules qui peuvent potentiellement jouer le rôle de cellule serveuse en une localisation donnée, étant entendu qu'à un instant donné, un terminal utilisateur n'est attaché qu'à une unique cellule serveuse, dont il reçoit le signal utile. Elle propose en outre une méthode pour calculer les paramètres caractéristiques du rapport signal sur interférence plus bruit mesuré pour le terminal utilisateur dans ce cas réaliste, à partir des rapports signal sur interférence plus bruit mesurés pour le terminal utilisateur pour chacun des signaux radio émis par la pluralité de cellules susceptibles de jouer le rôle de cellule serveuse, à savoir celles dont la puissance de réception du signal utile en cette localisation est la plus élevée.

Ce rapport signal sur interférence plus bruit, que l'on peut qualifier de réaliste compte tenu de l'hypothèse de travail formulée, est calculé sous la forme d'un maximum, à l'échelle logarithmique, des rapports signal sur interférence plus bruit des différentes cellules serveuses potentielles.

Avantageusement, afin de pouvoir estimer les paramètres caractéristiques de la qualité de réception en une localisation donnée, la méthode repose sur la détermination d'un coefficient de corrélation entre les rapports signal sur interférence plus bruit précédemment déterminés.

La connaissance du maximum des rapports signal sur interférence plus bruit et d'un coefficient de corrélation entre ces rapports signal sur interférence plus bruit permet d'estimer un certain nombre de paramètres caractéristiques de la qualité de réception en une localisation donnée, et notamment la probabilité, sur une zone géographique, d'avoir un rapport signal sur interférence plus bruit supérieur à un seuil donné, pour estimer par exemple la qualité de la couverture du réseau de radiocommunication cellulaire.

Selon un mode de réalisation particulier, le coefficient de corrélation est déterminé à partir d'une approximation d'une moyenne d'un produit desdits au moins deux rapports signal sur interférence plus bruit.

Selon les travaux de S C. E. Clark, "The greatest of a finite set of random variables," in Operations Research, Vol. 9, No. 2, 145-162, 1961, la moyenne et la variance peuvent être calculées pour le maximum de deux variables aléatoires normales corrélées, en supposant connu le coefficient de corrélation entre ces deux variables. Dans le cas de la planification et de l'optimisation d'un réseau cellulaire, le coefficient de corrélation entre les SINRs de deux cellules potentiellement serveuses à l'échelle logarithmique n'est pas une quantité connue. Ainsi, selon un mode de réalisation de l'invention on approxime la moyenne du produit des SINRs à l'échelle logarithmique et on détermine ensuite le coefficient de corrélation. En d'autres termes, selon ce mode de réalisation, on approxime le coefficient de corrélation en se basant sur un calcul mathématique de bornes. De ce fait, l'implémentation de la méthode est simple à mettre en place et nécessite une puissance de calcul moindre au niveau des outils de planification et d'optimisation du réseau.

Il est ainsi possible de déterminer le coefficient de corrélation entre les SINRs en chaque point du réseau de radiocommunication où l'on désire faire une optimisation de ce dernier.

Selon un autre mode de réalisation particulier, ledit coefficient de corrélation est déterminé à partir :

- d'un calcul d'au moins deux rapports signal sur interférence plus bruit ne prenant en compte qu'une unique cellule générant des interférences offrant une puissance moyenne en réception d'un signal utile à ladite localisation la plus élevée ; et
- d'au moins deux variances représentatives d'un impact sur les puissances moyennes de réception dudit signal utile, d'obstacles que ledit signal utile rencontre pendant sa propagation.

Avantageusement, la détermination du coefficient de corrélation est particulièrement simple à implémenter par les outils de planification et d'optimisation du réseau. En effet, l'expression des coefficients de corrélation correspond à une expression mathématique simple. Il n'y a donc pas besoin de faire des réalisations de type Monte Carlo pour générer les coefficients de corrélation.

Selon un mode de réalisation, le procédé selon l'invention comprend en outre un calcul d'une moyenne et d'une variance desdits au moins deux rapports signal sur interférence plus bruit déterminés à l'échelle logarithmique. Le coefficient de corrélation est alors déterminé selon la formule :

$$\tau_{ij} = \frac{E\left[SINR_i^{dB} \, SINR_j^{dB}\right] - q_i q_j}{s_i s_j}$$

où:

$SINR_i$ et $SINR_j$ désignent respectivement lesdits au moins deux rapports signal sur interférence plus bruit déterminés à l'échelle logarithmique desdites au moins deux cellules,

$q_i$ et $q_j$ désignent respectivement lesdites moyennes desdits au moins deux rapports signal sur interférence plus bruit déterminés à l'échelle logarithmique,

$s_i$ et $s_j$ désignent respectivement lesdites variances desdits au moins deux rapports signal sur interférence plus bruit déterminés à l'échelle logarithmique.

Comme on le verra plus en détail dans la suite de ce document, les paramètres caractéristiques des distributions (moyenne et variance) des rapports signal sur interférence plus bruit pour des cellules sont calculés, par exemple selon la technique Schwartz-Yeh décrite dans l'article de C.-L. Ho, "Calculating the mean and variance of power sums with two log-normal components," IEEE Trans. Veh. Technol., vol. 44, no. 4, pp. 756-762, 1995.

Il est ainsi possible d'appliquer l'étude C. E. Clark, "The greatest of a finite set of random variables," in Operations Research, Vol. 9, No. 2, 145-162, 1961, pour calculer les paramètres caractéristiques de moyenne et variance du SINR maximal ($SINR^{dB}$).

Selon un aspect particulier, l'estimation des paramètres caractéristiques comprend un calcul d'au moins certains des éléments appartenant au groupe comprenant :

- une moyenne dudit maximum calculé ;
- une variance dudit maximum calculé ;

à partir du coefficient de corrélation déterminé et des moyennes et variances desdits au moins deux rapports signal sur interférence plus bruit déterminés à l'échelle logarithmique.

Ainsi, la technique de l'invention permet de calculer les expressions de la moyenne et de la variance à l'échelle logarithmique du maximum des SINRs. Connaître la moyenne et la variance permet une optimisation de la couverture réseau de l'opérateur plus fine.

Selon un autre aspect particulier, la moyenne du maximum calculé est calculée selon la formule :

$$q_z = q_i \Phi\left(\frac{q_i - q_j}{\theta}\right) + q_j \Phi\left(\frac{q_j - q_i}{\theta}\right) + \theta \phi\left(\frac{q_i - q_j}{\theta}\right)$$

où :

$$\theta = \sqrt{s_i^2 + s_j^2 - 2\tau_{ij} s_i s_j},$$

$\phi(.)$ est la fonction de la densité de probabilité de la loi normale standard centrée réduite,

$\Phi(.)$ est la fonction de répartition de la loi normale standard,

$q_i$ et $q_j$ désignent respectivement lesdites moyennes desdits au moins deux rapports signal sur interférence plus bruit déterminés à l'échelle logarithmique,

$s_i^2$ et $s_j^2$ désignent respectivement lesdites variances desdits deux rapports signal sur interférence plus bruit déterminés à l'échelle logarithmique, et

$\tau_{ij}$ est ledit coefficient de corrélation entre lesdits deux rapports signal sur interférence plus bruit déterminés à l'échelle logarithmique.

Selon un autre aspect particulier ladite variance dudit maximum calculé est calculée selon la formule :

$$s_z^2 = \left(s_i^2 + q_i^2\right)\Phi\left(\frac{q_i - q_j}{\theta}\right) + \left(s_j^2 + q_j^2\right)\Phi\left(\frac{q_j - q_i}{\theta}\right) + \left(q_i + q_j\right)\theta\phi\left(\frac{q_i - q_j}{\theta}\right) - (q_z)^2$$

où :

$$\theta = \sqrt{s_i^2 + s_j^2 - 2\tau_{ij}s_i s_j},$$

$\phi(.)$ est la fonction de la densité de probabilité de la loi normale standard centrée réduite,

$\Phi(.)$ est la fonction de répartition de la loi normale standard,

$q_i$ et $q_j$ désignent respectivement lesdites moyennes desdits deux rapports signal sur interférence plus bruit déterminés à l'échelle logarithmique,

$s_i^2$ et $s_j^2$ désignent respectivement lesdites variances desdits deux rapports signal sur interférence plus bruit déterminés à l'échelle logarithmique,

$\tau_{ij}$ est ledit coefficient de corrélation entre lesdits deux rapports signal sur interférence plus bruit déterminés à l'échelle logarithmique, et

$q_z$ est ladite moyenne dudit maximum calculé.

Selon un mode de réalisation particulier, la détermination du maximum entre lesdits au moins deux rapports signal sur interférence plus bruit déterminés à l'échelle logarithmique, comprend, le cas échéant, une détermination, parmi lesdites au moins deux cellules sélectionnées, d'au moins deux cellules ayant entre elles un écart de puissance moyenne supérieur ou égal à un seuil ($\lambda$) prédéterminé.

Avantageusement, parmi les cellules sélectionnées pouvant être potentiellement des serveuses, il est possible de ne pas prendre en compte des cellules offrant une puissance moyenne en réception très faible par rapport aux cellules offrant des puissance moyenne en réception élevées. En effet, lorsque la puissance moyenne en réception pour un signal émis par une cellule $k$ est très inférieure à la puissance moyenne offerte par une cellule $i$ offrant une puissance moyenne en réception la plus élevée parmi les cellules potentiellement serveuses sélectionnées, la probabilité pour que le SINR de la cellule $k$ soit le maximum est négligeable. Ainsi, afin de simplifier le calcul du maximum des SINRs, il est judicieux de ne pas tenir compte de cette cellule $k$. Pour cela on fixe un seuil $\lambda$ (supérieur à 0 ; en dB) pour lequel si une cellule offre une puissance moyenne en réception écartée de plus de $\lambda$ de la puissance moyenne en réception la plus élevée, alors son SINR n'est pas pris en considération pour le calcul du maximum des SINRs.

L'invention concerne également un produit programme d'ordinateur comprenant des instructions de code de programme pour la mise en oeuvre d'un procédé d'estimation de paramètres caractéristiques d'une qualité de réception en une localisation d'un réseau de radiocommunication cellulaire tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé d'estimation de paramètres caractéristiques d'une qualité de réception en une localisation d'un réseau de radiocommunication cellulaire selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé précité d'estimation de paramètres caractéristiques d'une qualité de réception en une localisation d'un réseau de radiocommunication cellulaire.

L'invention concerne encore un procédé de planification du déploiement d'un réseau de radiocommunication cellulaire, qui met en oeuvre une estimation de paramètres caractéristiques d'une qualité de réception en une localisation dudit réseau, selon le procédé décrit précédemment, et une détermination de paramètres de planification du réseau en fonction des paramètres caractéristiques estimés.

Un tel procédé peut par exemple être mis en oeuvre dans des outils de planification de type Merit/Acp® ou Atoll® par exemple.

Elle concerne aussi un procédé d'optimisation de paramètres de fonctionnement d'un réseau de radiocommunication cellulaire, qui met en oeuvre une estimation de paramètres caractéristiques d'une qualité de réception en une localisation dudit réseau, selon le procédé décrit précédemment, et une détermination de paramètres optimisés de fonctionnement du réseau en fonction des paramètres caractéristiques estimés.

Un tel procédé peut être intégré dans des outils d'optimisation de type CSON®.

L'invention concerne encore un procédé de surveillance de performance d'un réseau de radiocommunication cellulaire, qui met en oeuvre une estimation de paramètres caractéristiques d'une qualité de réception en une localisation dudit réseau, selon le procédé décrit précédemment, et une estimation d'au moins un critère de performance du réseau en fonction des paramètres caractéristiques estimés.

L'invention concerne encore un système de planification du déploiement d'un réseau de radiocommunication cellulaire, qui comprend un processeur configuré pour exécuter les étapes du procédé d'estimation de paramètres caractéristiques d'une qualité de réception en une localisation dudit réseau, tel que décrit précédemment, et pour déterminer des paramètres de planification du réseau en fonction des paramètres caractéristiques estimés.

L'invention concerne aussi un système d'optimisation de paramètres de fonctionnement d'un réseau de radiocommunication cellulaire, qui comprend un processeur configuré pour exécuter les étapes du procédé d'estimation de paramètres caractéristiques d'une qualité de réception en une localisation dudit réseau, tel que décrit précédemment, et pour déterminer des paramètres optimisés de fonctionnement du réseau en fonction des paramètres caractéristiques estimés.

L'invention concerne enfin un système de surveillance de performance d'un réseau de radiocommunication cellulaire, qui comprend un processeur configuré pour exécuter les étapes du procédé d'estimation de paramètres caractéristiques d'une qualité de réception en une localisation dudit réseau de radiocommunication cellulaire tel que décrit précédemment et pour analyser une performance du réseau en fonction des paramètres caractéristiques estimés.

## Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

**[Fig 1]** présente sous forme schématique un réseau de radiocommunication cellulaire auquel peut être appliqué le procédé d'estimation selon différents modes de réalisation de l'invention ;

**[Fig 2]** illustre sous forme schématique l'existence d'une zone de propagation commune pour les cellules corrélées du réseau de la figure 1 ;

**[Fig 3]** décrit sous forme d'organigramme les principales étapes du procédé d'estimation selon un premier mode de réalisation de l'invention ;

**[Fig 4]** décrit sous forme d'organigramme les principales étapes du procédé d'estimation selon un deuxième mode de réalisation de l'invention ;

**[Fig 5]** présente sous forme d'histogramme la valeur absolue de l'erreur sur le calcul de la moyenne du SINR perçu par l'utilisateur à une localisation d'intérêt, à l'échelle logarithmique, selon le mode de réalisation de l'invention en lien avec la figure 3 ;

**[Fig 6]** présente sous forme d'histogramme la valeur absolue de l'erreur sur le calcul de la moyenne du SINR perçu par l'utilisateur à une localisation d'intérêt, à l'échelle logarithmique selon le mode de réalisation de l'invention en lien avec la figure 4 ;

**[Fig 7]** présente sous forme schématique la structure matérielle d'un système de surveillance des performances d'un réseau de radiocommunication cellulaire de la figure 1 dans un mode de réalisation de l'invention.

## Description détaillée de modes de réalisation de l'invention

Le principe général de l'invention repose sur une estimation de paramètres caractéristiques de la qualité de réception d'un signal utile en tout point d'un réseau de radiocommunication cellulaire, fondée sur une hypothèse réaliste consistant à considérer que plusieurs cellules sont susceptibles de jouer le rôle de cellule serveuse, en une localisation donnée, en raison du phénomène aléatoire de « shadowing ».

La solution proposée permet de calculer les expressions de la moyenne et de la variance à l'échelle logarithmique du SINR « réel », c'est-à-dire mesuré pour un terminal utilisateur, en tout point d'un réseau de radiocommunication cellulaire. Connaître la moyenne et la variance du SINR permet une optimisation plus fine de la couverture du réseau d'un opérateur.

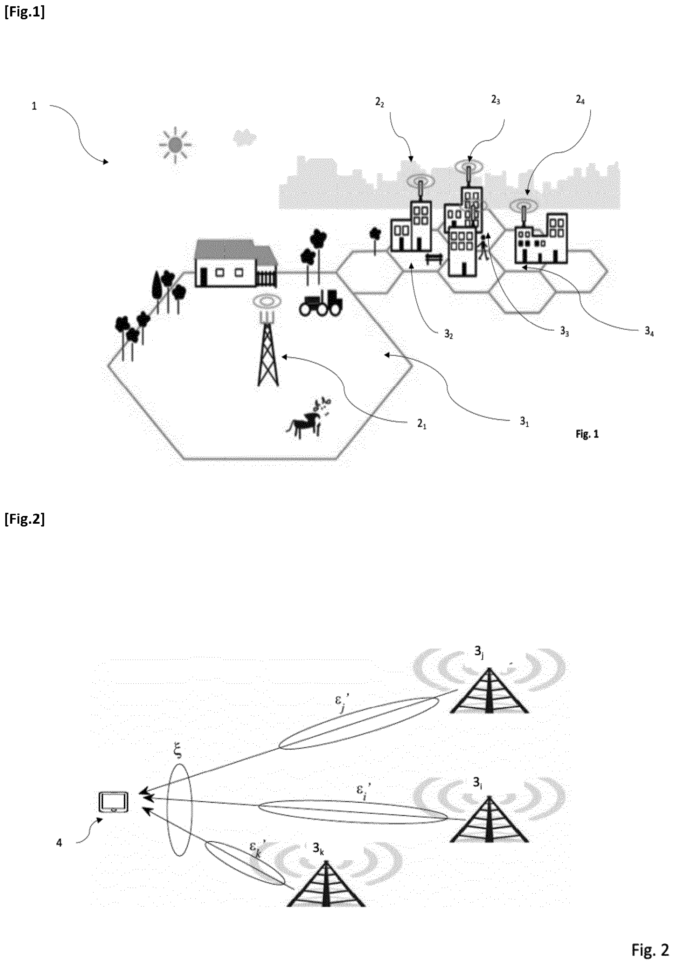

Pour mémoire, et comme illustré par la **Figure 1,** un réseau de radiocommunication cellulaire 1, ou réseau mobile, est composé d'un réseau d'antennes-relais (ou stations de base) $2_1$ à $2_N$ (N=4 dans l'exemple représenté), couvrant chacune une portion de territoire délimitée $3_1$ à $3_P$ (P=4 dans l'exemple représenté), couramment appelée cellule (représentée schématiquement sous forme hexagonale sur la Figure 1), et acheminant les communications sous forme d'ondes radio vers et depuis les terminaux utilisateurs situés dans la cellule correspondante.

Pour accéder aux services proposés par l'opérateur du réseau (voix ou données), un terminal utilisateur doit donc être situé dans la zone de couverture d'une antenne-relais $2_i$. Celle-ci a une portée limitée, et ne couvre qu'un territoire restreint autour d'elle, appelé cellule. Pour couvrir un maximum de territoire et faire en sorte que les terminaux utilisateurs aient toujours accès aux services proposés, les opérateurs déploient des milliers de cellules $3_i$, chacune d'elles étant équipée d'antennes $2_i$ en faisant en sorte que leurs zones de couverture se chevauchent, de façon à offrir un maillage aussi complet que possible du territoire.

En effet, si un terminal utilisateur est capable de décoder correctement le signal qui lui est destiné pour un service donné, alors ce service est accessible avec une qualité suffisante à l'emplacement du terminal utilisateur. La zone de couverture pour ce service est l'ensemble des emplacements où le SINR déterminé pour le terminal utilisateur est supérieur à un seuil donné. L'opérateur dimensionne et paramètre son réseau selon ses objectifs incluant la couverture, par exemple 99% du territoire doit être couvert pour le service voix, 95% pour le service vidéo etc. Comme la couverture ne peut pas être mesurée à tout emplacement du réseau, l'estimation précise du SINR et de ses paramètres caractéristiques est déterminante pour assurer les objectifs de couverture de l'opérateur.

On notera que la taille des cellules dépend de multiples critères tels que le type d'antennes relais utilisé, le relief (plaine, montagne, vallée...), le lieu d'implantation (zone rurale, zone urbaine...), la densité de population, etc. La taille de la cellule $3_i$ est également limitée par la portée des terminaux utilisateurs, qui doivent être capables d'établir une liaison en voie remontante avec l'antenne-relais.

Par ailleurs, une antenne-relais $2_i$ a une capacité de transmission limitée, et ne peut traiter qu'un certain nombre de requêtes d'accès au service simultanées. C'est la raison pour laquelle, en ville, où la densité de population est grande et le nombre de communications important, les cellules tendent à être nombreuses et de petite dimension - espacées de quelques centaines voire seulement de quelques dizaines de mètres. A la campagne, où la densité de population est bien plus faible, la taille des cellules est bien plus grande, allant parfois jusqu'à plusieurs kilomètres mais ne dépassant que très rarement plus de dix kilomètres.

La planification et l'optimisation du fonctionnement d'un réseau de radiocommunication cellulaire 1 sont donc des problématiques complexes et délicates pour l'opérateur du réseau. Elles nécessitent de disposer d'informations fiables et précises quant à la qualité de réception qu'une configuration donnée d'antennes-relais et de cellules peut offrir en tout point du réseau. Ces informations peuvent être obtenues par une connaissance du rapport signal sur interférence plus bruit, ou SINR, en tout point du réseau. Ce dernier ne pouvant cependant pas être effectivement mesuré en tout point du réseau, il est important pour l'opérateur de pouvoir disposer d'une estimation statistique de ce paramètre et de ses caractéristiques de variance et de moyenne. L'estimation des caractéristiques du SINR est alors utilisée par l'opérateur dans des outils de planification pour optimiser la couverture radio.

La technique de l'invention vise à proposer une méthode d'estimation du SINR en toute localisation du réseau, en partant de l'hypothèse que plusieurs cellules peuvent potentiellement jouer le rôle de cellule serveuse en un point donné, en raison du phénomène aléatoire de « shadowing ».

On s'attache plus particulièrement dans la suite, en relation avec les **Figures 2 à 4,** à décrire l'estimation du SINR réellement mesuré pour un terminal utilisateur 4 à une localisation d'intérêt, dans le cas où l'on considère que plusieurs cellules du réseau peuvent jouer le rôle de cellule serveuse en cette localisation d'intérêt.

Selon une approche classique dans le cadre de la simulation de la couverture radio d'un réseau, on suppose ici que les valeurs des charges ($\rho$) des cellules sont égales. Pour mémoire, la charge ($\rho$) d'une cellule correspond à la fraction de ressources accordées par celle-ci aux terminaux utilisateurs situés dans sa zone de couverture.

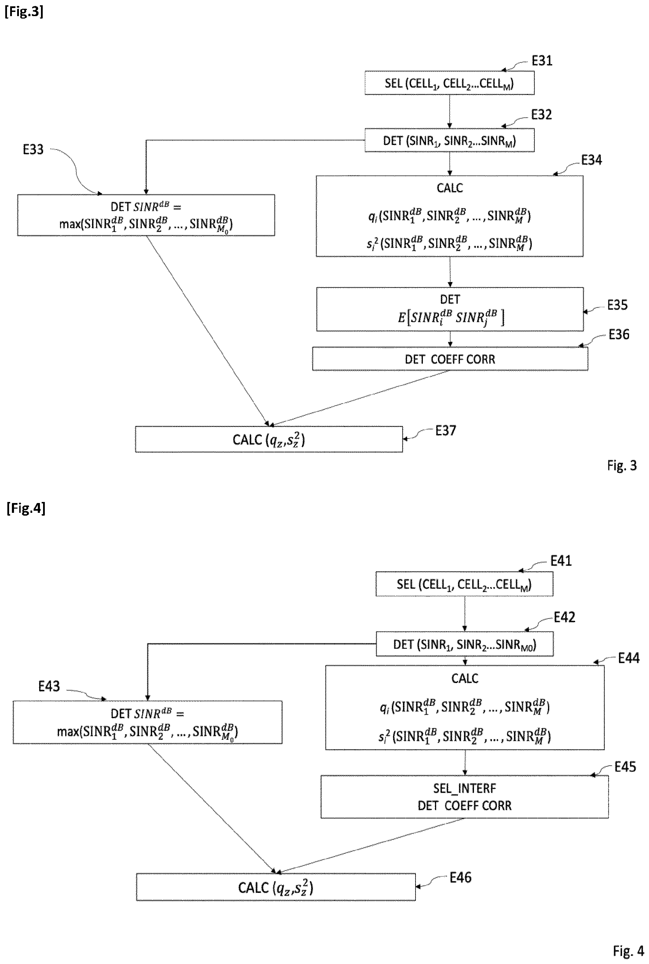

On décrit tout d'abord en lien avec la **Figure 3,** un premier mode de réalisation selon l'invention. Au cours d'une étape E31, on sélectionne un ensemble comprenant au moins deux cellules pouvant potentiellement jouer le rôle de cellule serveuse pour un terminal utilisateur en une localisation donnée. On cherche en particulier à sélectionner les cellules du réseau de communication offrant une puissance moyenne de réception d'un signal utile la plus élevée à la localisation du terminal utilisateur 4. En d'autres termes, on sélectionne les cellules pour lesquelles le terminal utilisateur 4 capte un signal utile. Dans un exemple en lien avec la **Figure 2,** on sélectionne parmi les cellules du réseau de communication, les trois cellules : $3_i$, $3_j$, $3_k$.

Dans un autre exemple en lien avec la **Figure 3,** ou la **Figure 4,** on considère un nombre $M$ de cellules ($M$ étant un entier supérieur ou égal à 1) : cellule 1, cellule 2...jusqu'à la cellule $M$ (respectivement noté : $CELL_1$, $CELL_2$...CELL$_M$).

Pour mémoire, l'expression du $SINR_i$ mesuré pour un terminal utilisateur à une localisation d'intérêt dans le cas où sa cellule serveuse est la cellule $i$ est :

$$SINR_i = \frac{10^{\frac{\mu_i + \varepsilon_i}{10}}}{N + \sum_{j=1, j \neq i}^{M} \rho_j 10^{\frac{\mu_j + \varepsilon_j}{10}}} \quad (EQ1)$$

où

$M$ est le nombre de cellules en provenance desquelles le terminal utilisateur situé à la localisation d'intérêt capte un signal utile,

N est la puissance du bruit thermique,

pour $1 \leq i \leq M$, $\mu_i$ est la puissance moyenne du signal reçu depuis la cellule $i$. Sans perte de généralité, on suppose que, $\mu_1 \geq \mu_2 \geq \cdots \geq \mu_M$. Autrement dit, on considère par la suite que la cellule 1 (CELL$_1$) offre une puissance moyenne en réception supérieure à la cellule 2 (CELL$_2$) qui a une puissance moyenne en réception supérieure à la cellule 3 (CELL$_3$) etc...la cellule $M$ (CELL$_M$) offrant donc la puissance en réception moyenne la plus faible parmi l'ensemble des cellules sélectionnées à l'étape E31,

$\varepsilon_i$ est une variable aléatoire normale centrée de variance $\sigma_i^2$ qui désigne le « shadowing » et

$\rho_j$ désigne la charge de la cellule $j$. Comme décrit précédemment, on suppose ici que les valeurs des charges des cellules sont égales, c'est-à-dire : $\rho_1 = \cdots = \rho_M = \rho$.

En raison du phénomène de « shadowing », la cellule serveuse n'est pas « figée » et plusieurs cellules peuvent jouer le rôle de serveuse statistiquement. La cellule serveuse du terminal utilisateur à une localisation d'intérêt est donc celle qui offre la puissance reçue la plus élevée, et non pas forcément celle qui offre la puissance moyenne en réception la plus élevée. Autrement dit, si la cellule $i$ est la cellule serveuse, alors : $\mu_i + \varepsilon_i > \mu_j + \varepsilon_j$ (pour tout $j \neq i$ ).

Les variables aléatoires de « shadowing » des différentes cellules considérées sont corrélées puisqu'elles correspondent à l'impact sur la puissance reçue par le terminal utilisateur, des obstacles que le signal franchit pendant sa propagation depuis une antenne-relais vers le terminal utilisateur. Ces obstacles présents dans l'environnement proche du terminal utilisateur sont par conséquent les mêmes pour les différentes cellules considérées. Le « shadowing » impactant le chemin $i, j, k$ (en provenance de la cellule $3_i$, $3_j$, $3_k$ et à destination du terminal utilisateur 4) est donc la somme de deux variables aléatoires gaussiennes indépendantes l'une de l'autre dont l'une $\xi$ est commune à tous les chemins $i, j, k$ à destination du terminal utilisateur 4 comme le montre la **Figure 2.** On pourra se référer, à cet égard, aux travaux de S. S. Szyszkowicz, H. Yanikomeroglu, et J. S. Thompson, "On the feasibility of wireless shadowing corrélation models," IEEE Trans. Veh. Technol., vol. 59, no. 9, pp. 4222**.**

Ainsi, on peut écrire que

$$\varepsilon_i = \varepsilon'_i + \xi,$$

$$\varepsilon_j = \varepsilon'_j + \xi$$

$$\varepsilon_k = \varepsilon'_k + \xi$$

Où $\varepsilon'_i$, $\varepsilon'_j$, $\varepsilon'_k$ et $\xi$ ($1 \leq i \neq j \neq k \leq M$) sont des variables aléatoires normales indépendantes de moyennes nulles et de variances $\sigma_i'^2 = \sigma_i^2 - \beta^2$, $\sigma_j'^2 = \sigma_j^2 - \beta^2$, $\sigma_k'^2 = \sigma_k^2 - \beta^2$ et $\beta^2$, respectivement, où $\beta^2$ est la variance de $\xi$.

Au cours d'une étape E32, pour calculer les paramètres caractéristiques du SINR dit « réel », c'est-à-dire mesuré pour le terminal utilisateur, dans le cas réaliste où l'on prend en compte ce phénomène de « shadowing », on détermine à l'aide de l'équation EQ1 précédente les expressions des SINRs (SINR$_1$, SINR$_2$...SINR$_M$) mesurés pour chaque cellule de l'ensemble de cellules (CELL$_1$, CELL$_2$...CELL$_M$) sélectionné au cours de l'étape E31. On considère dans ce cas que chaque cellule peut potentiellement jouer le rôle de serveuse.

En conséquence, si l'on considère que les cellules (CELL$_1$, CELL$_2$...CELL$_M$) sélectionnées peuvent statistiquement jouer le rôle de cellule serveuse, le SINR mesuré pour le terminal utilisateur à la localisation d'intérêt revient donc à déterminer un maximum entre tous les SINRs (SINR$_1$, SINR$_2$ ...SINR$_M$) mesurés, c'est-à-dire :

$$\text{SINR}^{dB} = \max\left(\text{SINR}_1^{dB}, \text{SINR}_2^{dB}, \dots, \text{SINR}_M^{dB}\right)$$

où

$$\text{SINR}_i^{dB} = 10 \log_{10} SINR_i, \qquad\qquad 1 \leq i \leq M \ ;$$

et SINR$^{dB}$ = 10log$_{10}$ *SINR*.

Il est à noter que si une cellule *k* offre une puissance moyenne en réception ($\mu_k$) très faible par rapport à celle de la première cellule (CELL$_1$) (dans le cas présent, on suppose que la première cellule a la puissance moyenne en réception la plus élevée parmi l'ensemble de cellules 1 à *M*), autrement dit $\mu_k \ll \mu_1$ alors la probabilité que le SINR (SINR$_k$) mesuré pour la cellule *k* corresponde au maximum des SINRs est négligeable. Ainsi, tenir compte de la cellule *k* apporte plus de complexité que de précision dans le calcul du maximum des SINRs.

Afin de simplifier le calcul du maximum des SINRs, il est donc judicieux de ne pas tenir compte de cette cellule *k*. Ainsi, on considère que si $\mu_k < \mu_1 - \lambda$ (dB) où $\lambda > 0$, la cellule n'est pas considérée comme potentiellement serveuse. $\lambda$ est une variable paramétrable permettant de poser une limite sur le nombre de cellules à prendre en considération pour le calcul du maximum des SINRs. Par exemple, si l'on fixe $\lambda$= 20dB, alors toutes les cellules ayant une puissance moyenne $\mu$ écartée de plus de 20dB de la puissance moyenne de réception la plus élevée ne sont pas prises en considération pour le calcul du SINR maximal (c'est-à-dire SINR$^{dB}$), car la possibilité que ces cellules jouent le rôle de cellules serveuses est négligeable.

On peut donc réduire le nombre de cellules à prendre en considération dans le calcul du SINR maximal. On considère donc $M_0 \leq M$, le nombre de cellules dont les puissances moyennes sont supérieures ou égale à $\mu_1 - \lambda$ en dB.

Ainsi, dans une étape E33, on détermine le maximum des SINRs comme suit :

$$SINR^{dB} = \max\left(SINR_1^{dB}, SINR_2^{dB}, \dots, SINR_{M_0}^{dB}\right).$$

Typiquement, $M_0$ = 2, 3 ou 4 cellules.

Toutefois, on considère toujours l'ensemble des cellules M dans le calcul du SINR$_i$ dans l'équation EQ1. En d'autres termes, pour le calcul de SINR$_1$ à SINR$_M$ à l'aide de l'équation EQ1, on prend en compte toutes les *M* cellules.

L'étude de C. E. Clark, "The greatest of a finite set of random variables" in Operations Research, Vol. 9, No. 2, 145-162, 1961**,** nous permet de calculer des paramètres caractéristiques de moyenne et variance pour le maximum de deux variables aléatoires normales corrélées. Par ailleurs, il est à noter que le maximum entre les deux variables normales est approximé par une loi normale. Ainsi, pour le cas du calcul du maximum des SINRs où $M_0$ cellules sont potentiellement serveuses, calculer le maximum des SINRs à l'échelle logarithmique revient à maximiser deux à deux les quantités $SINR_i^{dB}$, $1 \leq i \leq M_0$.

Par exemple, pour $M_0$ = 4,

$$SINR^{dB} = \max\left(\max\left[\max\left(SINR_1^{dB}, SINR_2^{dB}\right), SINR_3^{dB}\right], SINR_4^{dB}\right)$$

Cependant, dans l'étude C. E. Clark, "The greatest of a finite set of random variables," in Operations Research, Vol. 9, No. 2, 145-162, 1961**,** les coefficients de corrélation entre les variables aléatoires normales sont supposés connus. Au contraire, dans le cas de la planification et de l'optimisation du réseau cellulaire, le coefficient de corrélation entre les SINRs de deux cellules voisines à l'échelle logarithmique n'est pas une quantité connue.

Nous rappelons que le coefficient de corrélation entre $SINR_i^{dB}$ et $SINR_j^{dB}$ pour $1 \leq i \neq j \leq M_0$ est :

$$\tau_{ij} = \frac{E\left[SINR_i^{dB} SINR_j^{dB}\right] - q_i q_j}{s_i s_j} \qquad \text{(EQ2)}$$

Afin de pouvoir appliquer l'étude C. E. Clark, "The greatest of a finite set of random variables," in Operations Research, Vol. 9, No. 2, 145-162, 1961**,** pour calculer les paramètres caractéristiques de moyenne et variance du SINR maximal (SINR$^{dB}$), on détermine tout d'abord le coefficient de corrélation pour un ou plusieurs couples de cellules.

Pour cela, on détermine au cours d'une étape E34, les paramètres caractéristiques de distribution, c'est-à-dire la moyenne et la variance, de SINR$_i^{dB}$ par la technique Schwartz-Yeh, décrite dans l'article de C.-L. Ho, "Calculating the mean and variance of power sums with two log-normal components," IEEE Trans. Veh. Technol., vol. 44, no. 4, pp. 756-762, 1995**.** En effet, comme indiqué dans l'article **"**SINR and rate distributions for downlink cellular networks", IEEE Transactions on Wireless Communications, vol. 19, no. 7, pp. 4604-4616, 2020**,** les *SINR$_i$* (où $1 \leq i \leq M$), sont des variables aléatoires normales dans le domaine logarithmique, dont on peut calculer la moyenne et la variance. On note alors par $q_i$, $s_i^2$, respectivement la moyenne et la variance de SINR$_i^{dB}$.

On détermine ensuite au cours d'une étape E35 la moyenne du produit

$$E\left[SINR_i^{dB}\, SINR_j^{dB}\right], 1 \le i \ne j \le M_0$$ . On définit alors :

$$SINR_i = \frac{10^{\frac{\mu_i+\varepsilon_i'}{10}}}{\rho 10^{\frac{\mu_j+\varepsilon_j'}{10}} + Y_{ij}}$$

$$SINR_j = \frac{10^{\frac{\mu_j+\varepsilon_j'}{10}}}{\rho 10^{\frac{\mu_i+\varepsilon_i'}{10}} + Y_{ij}}$$

Où

$$Y_{ij} = N 10^{\frac{\xi}{10}} + \sum_{k=1}^{M} \rho\, 10^{\frac{\mu_k+\varepsilon_k'}{10}} - \rho 10^{\frac{\mu_i+\varepsilon_i'}{10}} - \rho 10^{\frac{\mu_j+\varepsilon_j'}{10}}.$$

$Y_{ij}$ est la somme de ($M$ - 1) variables aléatoires log-normales, donc $Y_{ij}$ est aussi log-normale.

A l'échelle logarithmique, on peut définir une variable $y$ = 10log($Y_{ij}$).$y$ est une variable aléatoire normale. Ainsi, les paramètres caractéristiques de $y$ sont calculés en se basant sur la technique de Schwartz-Yeh, décrite dans l'article de C.-L. Ho, "Calculating the mean and variance of power sums with two log-normal components," IEEE Trans. Veh. Technol., vol. 44, no. 4, pp. 756-762, 1995. On les note par $\mu_Y$ (sa moyenne) et $\sigma_Y^2$ (sa variance). Soient

$$x_i = \mu_i + \varepsilon_i' \text{ et } x_j = \mu_j + \varepsilon_j'.$$

$x_i$, $x_j$ et $y$ sont indépendantes, alors :

$$E\left[SINR_i^{dB}\, SINR_j^{dB}\right] = \mu_i\mu_j - E[x_i A_i] - E[x_j A_j] + E[A_i A_j] \quad \text{(EQ3)}$$

où

$$A_i = 10\, \log(10^{\frac{x_i+\rho_{dB}}{10}} + 10^{\frac{y}{10}}),$$

$$A_j = 10\log(10^{\frac{x_j+\rho_{dB}}{10}} + 10^{\frac{y}{10}})$$

et

$$\rho_{dB} = 10\log(\rho).$$

On peut alors approximer :

$$\begin{cases} A_i \simeq (x_i + \rho_{dB}) & \text{si } \mu_i + \rho_{dB} - \mu_Y \ge d \\ A_i \simeq y & \text{si } \mu_Y - \mu_i - \rho_{dB} \ge d \\ A_i \simeq 0.5(x_i + y) + c & \text{si } |\mu_i + \rho_{dB} - \mu_Y| < d \end{cases}$$

$$c = 0.5\rho_{dB} + 10\frac{\ln(2)}{\ln(10)}$$

Où $d > 0$ est un réel paramétrable.

Si la différence entre la moyenne de $x_j + \rho_{dB}$ et celle de $y$ est supérieure ou égale à $d$, on estime que

$$10^{\frac{x_j + \rho_{dB}}{10}} \gg 10^{\frac{y}{10}}.$$

En effet, quand $10^{\frac{x_j + \rho_{dB}}{10}} \gg 10^{\frac{y}{10}}$ (soit alors $\mu_i + \rho_{dB} \gg \mu_Y$), $A_i \simeq x_i + \rho_{dB}$. Inversement, si $10^{\frac{x_j + \rho_{dB}}{10}} \ll 10^{\frac{y}{10}}$ (soit alors $\mu_i + \rho_{dB} \ll \mu_Y$), $A_i \simeq x_i$. Sinon,

$$A_i = x_i + \rho_{\mathrm{dB}} + 10\log\left(1 + 10^{\frac{y - x_i - \rho_{\mathrm{dB}}}{10}}\right).$$

Notons que pour tout $x > 0$, on a $\log(1 + x) \geq \frac{\ln(2)}{\ln(10)} + 0.5\log(x)$.

En effet, si l'on considère une fonction $F(x) = \ln(1 + x) - \ln(2) - 0.5\ln(x)$, alors la dérivée de $F$ est $F'(x) = \frac{x - 1}{2x(1 + x)}$. Son tableau de variation est :

| $x$ | 0 | | 1 | | $+\infty$ |
|---|---|---|---|---|---|
| $F'(x)$ | | $-$ | 0 | $+$ | |
| $F(x)$ | $+\infty$ | | | | $+\infty$ |
| | | | 0 | | |

Ainsi, pour tout $x > 0$, $F(x) \geq 0$. En divisant par $\ln(10)$, $\frac{F(x)}{\ln(10)} \geq 0$. D'où, $\log(1 + x) \geq \frac{\ln(2)}{\ln(10)} + 0.5\log(x)$. En appliquant ce résultat, on obtient,

$$\log\left(1 + 10^{\frac{y - x_i - \rho_{\mathrm{dB}}}{10}}\right) \geq \frac{\ln(2)}{\ln(10)} + 0.5\frac{y - x_i - \rho_{\mathrm{dB}}}{10}.$$

Dans le cas où l'écart entre les quantités $\mu_i + \rho_{dB}$ et $\mu_Y$ n'est pas très grand, on approxime

$$\log\left(1 + 10^{\frac{y - x_i - \rho_{\mathrm{dB}}}{10}}\right) \simeq \frac{\ln(2)}{\ln(10)} + 0.5\frac{y - x_i - \rho_{\mathrm{dB}}}{10}.$$

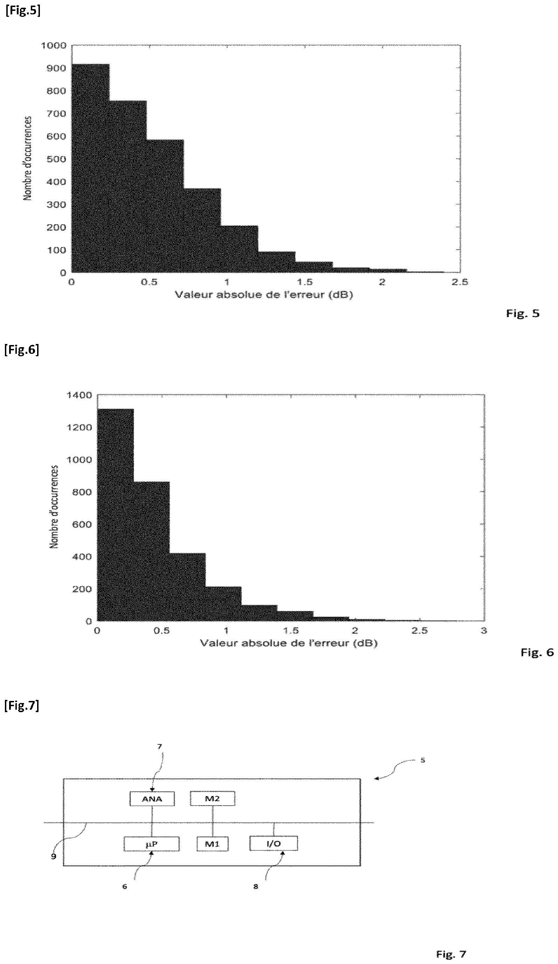

Avantageusement, comme montré ci-après en lien avec la **Figure 5,** l'erreur sur l'estimation du coefficient de corrélation impacte peu la précision de l'estimation des paramètres caractéristiques du SINR à l'échelle logarithmique (moyenne et variance). En résumé :

$$\begin{cases} A_i \simeq (x_i + \rho_{\mathrm{dB}}) & \text{si } \mu_i + \rho_{dB} \gg \mu_Y \\ A_i \simeq y & \text{si } \mu_i + \rho_{dB} \gg \mu_Y \\ A_i \simeq 0.5(x_i + y) + c & \text{sinon} \end{cases}$$

$$c = 0.5\rho_{dB} + 10\frac{\ln(2)}{\ln(10)}$$

Où .

Dans la suite, on considère que $\mu_i + \rho_{dB} \gg \mu_Y$ si l'écart entre $\mu_i + \rho_{dB}$ et $\mu_Y$ est supérieur à une valeur fixée $d$. Cela signifie $\mu_i + \rho_{dB} - \mu_Y \geq d$ où $d > 0$. Ainsi,

$$\begin{cases} A_i \simeq (x_i + \rho_{dB}) & \text{si } \mu_i + \rho_{dB} - \mu_Y \geq d \\ A_i \simeq y & \text{si } \mu_Y - \mu_i - \rho_{dB} \geq d \\ A_i \simeq 0.5(x_i + y) + c & \text{si } |\mu_i + \rho_{dB} - \mu_Y| < d \end{cases}$$

Le même raisonnement s'applique pour la quantité $A_j$ entre les variables aléatoires $x_j$ et $y$ :

$$\begin{cases} A_j \simeq (x_j + \rho_{dB}) & \text{si } \mu_j + \rho_{dB} - \mu_Y \geq d \\ A_j \simeq y & \text{si } \mu_Y - \mu_j - \rho_{dB} \geq d \\ A_j \simeq 0.5(x_j + y) + c & \text{si } |\mu_j + \rho_{dB} - \mu_Y| < d \end{cases}$$

En se basant sur ces approximations de $A_i$ et $A_j$, les expressions de $E[x_i A_i]$, $E[x_j A_j]$ et $E[A_i A_j]$ deviennent calculables facilement. Ainsi, on peut en déduire $E\left[SINR_i^{dB} SINR_j^{dB}\right]$. On injecte ensuite au cours d'une étape E36, l'expression de $E\left[SINR_i^{dB} SINR_j^{dB}\right]$ dans l'équation EQ2 ci-dessus pour obtenir le coefficient de corrélation entre $SINR_i^{dB}$ et $SINR_j^{dB}$ pour $1 \leq i \neq j \leq M_0$.

Notons que

- si

$$\tau_{ij} > 1, \text{ alors } \tau_{ij} = 1$$

- si

$$\tau_{ij} < -1, \text{ alors } \tau_{ij} = -1.$$

Ces différentes étapes référencées E31 à E36 permettent d'aboutir à la détermination, au cours d'une étape E37, de la moyenne et de la variance du maximum des SINRs à l'échelle logarithmique.

Il est à noter que l'étape référencée E33 peut être réalisée avant, après ou concomitamment aux étapes référencées E34 à E36.

Dans une étape E37, on détermine de manière itérative la moyenne et la variance du maximum deux à deux de SINRs, en se basant sur l'étude C. E. Clark, "The greatest of a finite set of random variables," in Operations Research, Vol. 9, No. 2, 145-162, 1961, et du coefficient de corrélation déterminé au cours de l'étape E36.

$$Z_1 = \max\left(SINR_1^{dB}, SINR_2^{dB}\right)$$

Pour cela, on considère une variable $Z_1 = \max\left(SINR_1^{dB}, SINR_2^{dB}\right)$ .

Alors, d'après C. E. Clark, "The greatest of a finite set of random variables," in Operations Research, Vol. 9, No. 2, 145-162, 1961 :

- la moyenne de $Z_1$ s'écrit :

$$q_{Z1} = f(q_1, q_2, s_1, s_2, \tau_{12}) \quad (EQ4.1)$$

- le moment d'ordre 2 de $Z_1$,

$$E[Z_1^2] = g(q_1, q_2, s_1, s_2, \tau_{12}) \quad (EQ4.2)$$

- la variance de $Z_1$

$$s_{Z1}^2 = E[Z_1^2] - q_{Z1}^2 \quad (EQ4.3)$$

- et le coefficient de corrélation entre $Z_1$ et $SINR_3^{dB}$ sont respectivement

$$\tau_{Z1,3} = h(q_1, q_2, s_1, s_2, \tau_{12}, \tau_{13}, \tau_{23}) \quad (EQ4.4)$$

Où

$$f(q_1, q_2, s_1, s_2, \tau_{12}) = q_1 \Phi\left(\frac{q_1 - q_2}{\theta}\right) + q_2 \Phi\left(\frac{q_2 - q_1}{\theta}\right) + \theta\phi\left(\frac{q_1 - q_2}{\theta}\right)$$

$$g(q_1, q_2, s_1, s_2, \tau_{12}) = (s_1^2 + q_1^2)\Phi\left(\frac{q_1 - q_2}{\theta}\right) + (s_2^2 + q_2^2)\Phi\left(\frac{q_2 - q_1}{\theta}\right) + (q_1 + q_2)\theta\phi\left(\frac{q_1 - q_2}{\theta}\right)$$

$$h(q_1, q_2, s_1, s_2, \tau_{12}\tau_{13}, \tau_{23}) = \frac{s_1\tau_{13}\Phi\left(\frac{q_1 - q_2}{\theta}\right) + s_2\tau_{23}\Phi\left(\frac{q_2 - q_1}{\theta}\right)}{\sqrt{g(q_1, q_2, s_1, s_2, \tau_{12}) - \left(f(q_1, q_2, s_1, s_2, \tau_{12})\right)^2}}$$

$$\theta = \sqrt{s_1^2 + s_2^2 - 2\tau_{12}s_1s_2},$$

$\phi(.)$ est la fonction de la densité de probabilité de la loi normale standard (centrée réduite) et $\Phi(.)$ et la fonction de répartition de la loi normale standard.

Si maintenant on veut calculer les mêmes paramètres pour $Z_2 = \max\left(Z_1, SINR_3^{dB}\right)$, il suffit de calculer $q_{Z2} = f(q_{Z1}, q_3, s_{Z1}, s_3, \tau_{Z1,3})$ et $E[Z_2^2] = g\left(q_{Z1}, q_3, s_{Z1}, s_3, \tau_{Z1,3}\right)$ puis en déduire $s_{Z2}^2$.

Si on veut calculer les paramètres pour $Z_3 = \max\left(Z_2, SINR_4^{dB}\right)$, il suffit de calculer $q_{Z3} = f(q_{Z2}, q_4, s_{Z2}, s_4, \tau_{Z2,4})$ et $E[Z_3^2] = g\left(q_{Z2}, q_4, s_{Z2}, s_4, \tau_{Z2,4}\right)$ puis en déduire $s_{Z3}^2$ où $\tau_{Z2,4} = h(q_{Z1}, q_3, s_{Z1}, s_3, \tau_{Z1,3}, \tau_{Z1,4}, \tau_{34})$ et $\tau_{Z1,4} = h(q_1, q_2, s_1, s_2, \tau_{13}, \tau_{14}, \tau_{24})$.

Et ainsi de suite jusqu'à $SINR_{M_0}^{dB}$.

Comme mentionné précédemment, les valeurs typiques de $M_0$ sont 2, 3 ou 4 cellules. Si :

- $M_0 = 2$, alors le maximum $SINR^{dB} = Z_1$. La moyenne et la variance de $SINR^{dB}$ sont celles de $Z_1$.

- $M_0 = 3$, alors le maximum $SINR^{dB} = Z_2$. La moyenne et la variance de $SINR^{dB}$ sont celles de $Z_2$.
- $M_0 = 4$, alors le maximum $SINR^{dB} = Z_3$. La moyenne et la variance de $SINR^{dB}$ sont celles de $Z_3$.

Avantageusement, l'erreur sur l'estimation du coefficient de corrélation impacte peu la précision de l'estimation des paramètres caractéristiques du SINR à l'échelle logarithmique (moyenne et variance). Il est donc possible d'utiliser une moyenne de coefficient de corrélation comme approximation du coefficient de corrélation, car l'erreur entre la moyenne (respectivement la variance) réelle et celle calculée en se basant sur les valeurs approximées de coefficients de corrélation est faible.

En effet, soit deux variables aléatoires normales corrélées de variances respectives $\gamma_1^2$ et $\gamma_2^2$. Soit $\tau$ le coefficient de corrélation entre ces deux variables. D'après les équations EQ4.1 et EQ4.3, la moyenne et la variance du maximum des deux variables dépend du coefficient $\tau$ par le biais de la quantité $\alpha = \sqrt{\gamma_1^2 + \gamma_2^2 - 2\tau\gamma_1\gamma_2}$.

Maintenant, soit $\tilde{\tau}$ une valeur approximée de $\tau$, alors

$$\alpha = \sqrt{(\gamma_1^2 + \gamma_2^2 - 2\tilde{\tau}\gamma_1\gamma_2)\left(1 - \frac{2e\gamma_1\gamma_2}{\gamma_1^2 + \gamma_2^2 - 2\tilde{\tau}\gamma_1\gamma_2}\right)},$$

où $e = \tau - \tilde{\tau}$. Quand $\Delta \simeq 1$ (où $\Delta = \sqrt{\left(1 - \frac{2e\gamma_1\gamma_2}{\gamma_1^2 + \gamma_2^2 - 2\tilde{\tau}\gamma_1\gamma_2}\right)}$ ), on peut approximer $\alpha$ par $\alpha \simeq \sqrt{\gamma_1^2 + \gamma_2^2 - 2\tilde{\tau}\gamma_1\gamma_2}$. Dans ce cas, on peut considérer la valeur approximée du coefficient de corrélation dans les calculs.

Dans le cas d'espèce, la valeur approximée de $\tau_{ij}$ est la moyenne $\overline{\tau_{ij}}$ pour $1 \leq i \neq j \leq M_0$.

Pour évaluer la précision de cette approximation lors du calcul des coefficients de corrélation, on considère la métrique de l'erreur relative sur la quantité $\Delta$, soit donc la quantité $|\Delta - 1|$.

Pour valider cette approche théorique présentée en relation avec la **Figure 3,** les inventeurs de la présente demande de brevet ont simulé un réseau 1 avec six cellules, et considéré plusieurs réalisations correspondant à plusieurs valeurs de l'écart type du « shadowing » et plusieurs valeurs de l'écart entre les puissances moyennes en réception des deux cellules ayant les puissances moyennes en réception les plus élevées.

Ils ont également fait varier l'écart entre les puissances moyennes en réception avec les autres cellules interférentes. En particulier, ils simulent un réseau avec $M = 6$ cellules et $M_0 = 4$ cellules potentiellement serveuses. Nous considérons 3000 réalisations de type Monte Carlo correspondantes à plusieurs valeurs:

- de la puissance moyenne en réception d'un signal émis par la cellule 1 telle que $-100 \leq \mu_1 \leq -50$ *dBm,*
- des puissances moyennes en réception des signaux émis par des cellules sachant que $\mu_1 - \mu_i < \lambda$ pour $2 \leq i \leq 4$ car $M_0 = 4$ et $\mu_1 - \mu_i > \lambda$ pour $5 \leq i \leq 6$ avec $\lambda = 20$ dB,
- de l'écart type du « shadowing » : $7 \leq \sigma_i \leq 12$ *dB* pour $1 \leq i \leq M,$
- de $4 \leq \beta \leq 10$ *dB,*
- de $0.4 \leq \rho \leq 0.9$.

La valeur de $d$ est fixée à 7. Puisque $M_0 = 4$, nous avons 6 coefficients de corrélation à calculer pour chaque réalisation. Dans le tableau ci-dessous, on donne le pourcentage où l'erreur relative sur le calcul de $\Delta$ est inférieure ou égale à 15%.

[Tableau 1]

| | Approximation de $\tau_{12}$ | Approximation de $\tau_{13}$ | Approximation de $\tau_{14}$ | Approximation de $\tau_{23}$ | Approximation de $\tau_{24}$ | Approximation de $\tau_{34}$ |
|---|---|---|---|---|---|---|
| $\|\Delta - 1\| < 0,15$ | 97,7% | 96,6% | 96,7% | 75% | 79% | 82,1% |

Le **Tableau 1** représente l'erreur relative sur la valeur de $\Delta$. Les résultats du Tableau 1 justifient l'approximation par le calcul de bornes du coefficient de corrélation puisque l'erreur relative est faible (<0.15) dans la majorité des cas.

Nous calculons maintenant le $SINR_i$ maximum mesuré pour la cellule *i*. $SINR_i$ est le maximum entre l'ensemble des SINR provenant des $M_0$ serveuses potentielles pour le même scénario d'expérimentation.

Nous comparons la moyenne du SINR à l'échelle logarithmique (qu'on note par $\overline{SINR_{dB}}$) par rapport à notre approximation théorique.

Dans la **Figure 5,** nous donnons l'histogramme de la valeur absolue de l'erreur entre $\overline{SINR_{dB}}$ et la valeur approximée. Nous remarquons que la méthode théorique selon l'invention arrive à bien estimer le maximum du SINR vu que l'erreur sur la moyenne ne dépasse pas 1.5dB dans la majorité des cas.

Nous notons aussi une faible erreur sur l'estimation de la variance du SINR avec la méthode selon l'invention.

On présente désormais en lien avec la **Figure 4,** un deuxième mode de réalisation de l'invention. Dans ce mode particulier de réalisation, les étapes référencées E41 à E44 et E46 sont identiques aux étapes référencées E31 à E34 et E37, respectivement, décrites précédemment en lien avec la **Figure 3.**

Au cours d'une étape E45, on modifie l'expression des SINRs ($SINR_1$, $SINR_2$...$SINR_M$) mesurés pour un terminal utilisateur captant un signal radio émis par chacune des cellules de l'ensemble ($CELL_1$, $CELL_2$...$CELL_M$) au cours de l'étape E42. Plus particulièrement, on réduit à un, le nombre de cellules étant à l'origine d'interférences pouvant perturber la réception d'un signal radio par le terminal utilisateur à prendre en compte pour le calcul des SINRs. La cellule à l'origine d'interférences sélectionnée et conservée pour le calcul des SINRs est la cellule offrant la puissance moyenne en réception la plus élevée. Dans un exemple, on suppose que la cellule 1 (CELL1) est, parmi l'ensemble de cellules déterminé en E41, la cellule offrant la puissance moyenne en réception la plus élevée. Autrement dit : $\mu_1 >_- \mu_2 \geq \cdots \geq \mu_{M_0}$. Ainsi, on peut alors écrire :

$$SINR_1 \simeq \frac{10^{\frac{\mu_1 + \varepsilon_1'}{10}}}{\rho 10^{\frac{\mu_2 + \varepsilon_2'}{10}}}$$

Et

$$SINR_i \simeq \frac{10^{\frac{\mu_i + \varepsilon_i'}{10}}}{\rho 10^{\frac{\mu_1 + \varepsilon_1'}{10}}}$$

pour $2 \leq i \leq M_0$.

Au cours de l'étape E45, on approxime alors la valeur du coefficient de corrélation entre les SINRs à l'échelle logarithmique à partir des valeurs des SINRs déterminées en réduisant le nombre de cellules à l'origine d'interférences . De ce fait,

$$\tau_{12} \simeq -1,$$

$$\tau_{1j} \simeq -\frac{\sigma_1'^2}{\sqrt{(\sigma_1'^2 + \sigma_2'^2)(\sigma_1'^2 + \sigma_j'^2)}}, \text{ pour } 3 \leq j \leq M_0$$

et

$$\tau_{ij} \simeq \frac{\sigma_1'^2}{\sqrt{(\sigma_1'^2 + \sigma_i'^2)(\sigma_1'^2 + \sigma_j'^2)}}, \text{ pour } 2 \leq i \neq j \leq M_0$$

En effet, si l'on détaille le calcul, on a :

$$SINR_1^{dB} \simeq x_1 - \rho dB - x_2 \text{ et}$$

$$SINR_i^{dB} \simeq x_i - \rho dB - x_1 \text{ pour } 2 \leq i \leq M_0 \text{ ;}$$

où :

$$x_i = \mu_i + \varepsilon_i' \text{ pour } 1 \leq i \leq M_0 \text{ et } \rho dB = 10\log\rho.$$

Donc :

$$E[SINR_1^{dB}] \simeq \mu_1 - \mu_2 - \rho dB \text{ et var}[SINR_1^{dB}] \simeq \sigma_1'^2 + \sigma_2'^2$$

(on note « var » pour variance)
Et :

$$E[SINR_i^{dB}] \simeq \mu_i - \mu_1 - \rho dB \text{ et var}[SINR_i^{dB}] \simeq \sigma_1'^2 + \sigma_i'^2$$

En utilisant les valeurs approximées des $SINR_i^{dB}$ , la valeur approximée du coefficient de corrélation est :

$$\tau_{ij} \simeq \frac{E\left[SINR_i^{dB} SINR_j^{dB}\right] - E\left[SINR_i^{dB}\right]E\left[SINR_j^{dB}\right]}{\sqrt{\text{var}[SINR_i^{dB}]\text{var}[SINR_j^{dB}]}}$$

Alors : :

- pour les coefficients entre les cellules 1 et 2, on trouve :

$$E[SINR_1^{dB} SINR_2^{dB}] \simeq E[SINR_1^{dB}] E[SINR_2^{dB}] - (\sigma_1'^2 + \sigma_2'^2)$$

D'où :

$$\tau_{12} \simeq -1.$$

- pour les coefficients entre les cellules 1 et j $(3 \leq j \leq M_0)$, on a :

$$E[SINR_1^{dB} SINR_j^{dB}] \simeq E[SINR_1^{dB}] E[SINR_j^{dB}] - \sigma_1'^2$$

Ainsi :

$$\tau_{1j} \simeq -\frac{\sigma_1'^2}{\sqrt{(\sigma_1'^2 + \sigma_2'^2)(\sigma_1'^2 + \sigma_j'^2)}}$$

- pour les coefficients entre les cellules i et j ($2 \leq i \neq j \leq M_0$), on a :

$$E\left[SINR_i^{dB} \, SINR_j^{dB}\right] \simeq E\left[SINR_i^{dB}\right]E\left[SINR_j^{dB}\right] + \sigma_1'^2$$

D'où :

$$\tau_{ij} \simeq \frac{\sigma_1'^2}{\sqrt{\left(\sigma_1'^2 + \sigma_i'^2\right)\left(\sigma_1'^2 + \sigma_j'^2\right)}}$$

Ensuite, comme précédemment décrit en lien avec la **Figure 3,** à l'étape E37, on détermine au cours de l'étape E46, de manière itérative, la moyenne et la variance du $SINR^{dB}$, ou SINR maximal, en utilisant les équations EQ4.1, EQ4.2, EQ4.3 et EQ4.4 précédentes. Nous précisons ici que, dans les équations EQ4.1, EQ4.2, EQ4.3 et EQ4.4, nous utilisons les valeurs précises des moyennes et variances des $SINR_i^{dB}$, $1 \leq i \leq M\_0$ (obtenues dans l'étape E44) et les valeurs approximées des coefficients de corrélation calculées ci-dessus.

Pour valider cette autre approche théorique en lien avec la **Figure 4,** les inventeurs effectuent comme précédemment l'expérimentation suivante : simulation d'un réseau avec $M$ = 6 cellules et $M_0$ = 4 cellules potentiellement serveuses. Nous considérons 3000 réalisations de type Monte Carlo correspondantes à plusieurs valeurs :

- de la puissance moyenne en réception d'un signal émis par la cellule 1 telle que $-100 \leq \mu_1 \leq -50$ *dBm,*
- des puissances moyennes en réception des signaux émis par des cellules sachant que $\mu_1 - \mu_i \leq \lambda$ pour $2 \leq i \leq 4$ car $M_0$ = 4 et $\mu_1 - \mu_i > \lambda$ pour $5 \leq i \leq 6$ avec $\lambda$ = 20 dB,
- de l'écart type du « Shadowing » : $7 \leq \sigma_i \leq 12$ *dB* pour $1 \leq i \leq M,$
-
$$\text{de } 4 \leq \beta \leq 10 \; dB,$$

-
$$\text{de } 0.4 \leq \rho \leq 0.9.$$

Dans la **Figure 6,** nous donnons l'histogramme de la valeur absolue de l'erreur entre $\overline{SINR_{dB}}$ et la valeur approximée. Nous remarquons ici aussi que cette méthode théorique permet de bien estimer le maximum du SINR vu que l'erreur sur la moyenne ne dépasse pas 1.5 dB dans la majorité des cas.

Pour cette méthode aussi, nous notons une faible erreur sur l'estimation de la variance du SINR.

On présente désormais, en relation avec la **Figure 7,** la structure matérielle d'un système de surveillance de performance d'un réseau de radiocommunication cellulaire selon un mode de réalisation de l'invention, ou d'un système de planification du déploiement d'un réseau de radiocommunication cellulaire, ou d'un système d'optimisation de paramètres de fonctionnement d'un réseau de radiocommunication cellulaire.

Un tel système référencé 5 comprend une unité d'estimation de paramètres caractéristiques d'une qualité de réception en une localisation du réseau de radiocommunication cellulaire, et une unité d'analyse de performance du réseau (respectivement une unité de détermination de paramètres de planification du réseau ou une unité de détermination de paramètres optimisés de fonctionnement du réseau), en fonction des paramètres caractéristiques estimés.

Le terme unité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions.

Plus généralement, un tel système 5 de surveillance de performance du réseau (respectivement système de planification du déploiement du réseau ou système d'optimisation de paramètres de fonctionnement du réseau) comprend une mémoire vive M1 (par exemple une mémoire RAM), une unité de traitement 6 équipée par exemple d'un processeur, et pilotée par un programme d'ordinateur, représentatif de l'unité d'estimation de paramètres caractéristiques d'une qualité de réception en une localisation du réseau de radiocommunication cellulaire, stocké dans une mémoire morte M2 (par exemple une mémoire ROM ou un disque dur). A l'initialisation, les instructions de code du programme d'ordinateur sont par exemple chargées dans la mémoire vive M1 avant d'être exécutées par le processeur de l'unité de traitement 6. La mémoire vive M1 contient notamment les différentes variables utilisées dans les calculs décrits ci-avant en relation avec les **Figures 3** et **4**. Le processeur de l'unité de traitement 6 pilote le calcul des moyennes et variances des rapports signal sur interférence plus bruit de la pluralité de cellules serveuses potentielles, le calcul du coefficient de corrélation, ainsi que le calcul de la moyenne et de la variance du SINR à l'échelle logarithmique, correspondant au maximum des rapports $SINR^{dB}$.

La mémoire vive M1 peut également contenir les résultats des calculs effectués par le processeur de l'unité de traitement 6. Elle peut fournir ces résultats à une unité d'analyse de performance de réseau 7 (respectivement une unité de détermination de paramètres de planification du réseau ou une unité de détermination de paramètres optimisés de fonctionnement du réseau), équipée d'un processeur et pilotée par un programme d'ordinateur. Ce processeur peut être le même que celui de l'unité de traitement 6, ou en être distinct.

Le système 5 comprend également un module d'entrée/sortie I/O 8 permettant de restituer à l'opérateur du réseau les résultats de l'analyse de performance du réseau effectuée par l'unité d'analyse 7 (respectivement les résultats de la détermination des paramètres de planification effectuée par l'unité de détermination de paramètres de planification du réseau 7 ou les résultats de la détermination des paramètres optimisés de fonctionnement effectuée par l'unité de détermination de paramètres optimisés de fonctionnement du réseau 7).

L'ensemble des composants M1, M2, 6, 7 et 8 du système 5 sont par exemple reliés par un bus de communication 9.

La **Figure 7** illustre seulement une manière particulière, parmi plusieurs possibles, de réaliser le système de surveillance de performance du réseau (respectivement le système de planification du déploiement du réseau ou le système d'optimisation de paramètres de fonctionnement du réseau), afin qu'il effectue les étapes du procédé détaillé ci-dessus, en relation avec les **Figures 1 à 4** (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le système 5 de surveillance de performance du réseau (respectivement le système de planification du déploiement du réseau ou le système d'optimisation de paramètres de fonctionnement du réseau) est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1.  Procédé d'estimation de paramètres caractéristiques d'une qualité de réception en une localisation d'un réseau de radiocommunication cellulaire (1), **caractérisé en ce qu'**il comprend:

    - une sélection (E31, E41) parmi un ensemble de cellules ($3_i$) dudit réseau, d'au moins deux cellules offrant des puissances moyennes de réception d'un signal utile à ladite localisation les plus élevées ($CELL_1$, $CELL_2...CELL_M$) ;
    - une détermination (E32, E42), à l'échelle logarithmique, d'au moins deux rapports signal sur interférence plus bruit à ladite localisation pour ledit signal utile reçu en provenance de chacune desdites au moins deux cellules sélectionnées ($SINR^{dB}_1$, $SINR^{dB}_2...SINR^{dB}_M$) ;
    - une détermination (E36, E45) d'un coefficient de corrélation entre lesdits au moins deux rapports signal sur interférence plus bruit déterminés à l'échelle logarithmique,
    - une détermination (E33, E43) d'un maximum entre lesdits au moins deux rapports signal sur interférence plus bruit déterminés à l'échelle logarithmique;
    - une estimation (E37, E46) desdits paramètres caractéristiques d'une qualité de réception à ladite localisation à partir dudit maximum et dudit coefficient de corrélation.

2.  Procédé d'estimation de paramètres caractéristiques d'une qualité de réception selon la revendication 1, **caractérisé en ce que** ledit coefficient de corrélation est déterminé (E36) à partir d'une approximation d'une moyenne d'un produit desdits au moins deux rapports signal sur interférence plus bruit.

3.  Procédé d'estimation de paramètres caractéristiques d'une qualité de réception selon la revendication 1, **caractérisé en ce que** ledit coefficient de corrélation est déterminé (E45) à partir :

    - d'un calcul d'au moins deux rapports signal sur interférence plus bruit ne prenant en compte qu'une unique cellule générant des interférences offrant une puissance moyenne en réception d'un signal utile à ladite localisation la plus élevée ; et

- d'au moins deux variances représentatives d'un impact sur les puissances moyennes de réception dudit signal utile, d'obstacles que ledit signal utile rencontre pendant sa propagation.

4. Procédé d'estimation de paramètres caractéristiques d'une qualité de réception selon les revendications 1 à 2, **caractérisé en ce qu'il** comprend en outre :

- un calcul (E34, E44) d'une moyenne $(q(SINR_1, SINR_2...SINR_M))$ et d'une variance $(s^2(SINR_1, SINR_2...SINR_M))$ de chacun desdits au moins deux rapports signal sur interférence plus bruit déterminés à l'échelle logarithmique,

**et en ce que** ledit coefficient de corrélation est déterminé selon la formule :

$$\tau_{ij} = \frac{E\left[SINR_i^{dB}\, SINR_j^{dB}\right] - q_i q_j}{s_i s_j}$$

où:

$SINR_i$ et $SINR_j$ désignent respectivement lesdits au moins deux rapports signal sur interférence plus bruit déterminés à l'échelle logarithmique desdites au moins deux cellules,
$q_i$ et $q_j$ désignent respectivement lesdites moyennes de chacun desdits au moins deux rapports signal sur interférence plus bruit déterminés à l'échelle logarithmique,
$s_i$ et $s_j$ désignent respectivement lesdites variances de chacun desdits au moins deux rapports signal sur interférence plus bruit déterminés à l'échelle logarithmique.

5. Procédé d'estimation de paramètres caractéristiques d'une qualité de réception selon les revendications 3 à 4, **caractérisé en ce que** ladite estimation desdits paramètres caractéristiques comprend un calcul (E37, E46) d'au moins certains des éléments appartenant au groupe comprenant :

- une moyenne dudit maximum calculé ;
- une variance dudit maximum calculé ;

à partir dudit coefficient de corrélation déterminé et des moyennes et variances de chacun desdits au moins deux rapports signal sur interférence plus bruit déterminés à l'échelle logarithmique.

6. Procédé d'estimation de paramètres caractéristiques d'une qualité de réception selon la revendication 5, **caractérisé en ce que** ladite moyenne dudit maximum calculé est calculée selon la formule :

$$q_z = q_i \Phi\left(\frac{q_i - q_j}{\theta}\right) + q_j \Phi\left(\frac{q_j - q_i}{\theta}\right) + \theta \phi\left(\frac{q_i - q_j}{\theta}\right)$$

où :

$$\theta = \sqrt{s_i^2 + s_j^2 - 2\tau_{ij} s_i s_j},$$

$\phi(.)$ est la fonction de la densité de probabilité de la loi normale standard centrée réduite,
$\Phi(.)$ est la fonction de répartition de la loi normale standard,
$q_i$ et $q_j$ désignent respectivement lesdites moyennes de chacun desdits au moins deux rapports signal sur interférence plus bruit déterminés à l'échelle logarithmique,
$s_i^2$ et $s_j^2$ désignent respectivement lesdites variances de chacun desdits deux rapports signal sur interférence plus bruit déterminés à l'échelle logarithmique, et
$\tau_{ij}$ est ledit coefficient de corrélation entre lesdits deux rapports signal sur interférence plus bruit déterminés à l'échelle logarithmique.

**7.** Procédé d'estimation de paramètres caractéristiques d'une qualité de réception selon la revendication 6, **caractérisé en ce que** ladite variance dudit maximum calculé est calculée selon la formule :

$$s_z^2 = \left(s_i^2 + q_i^2\right)\Phi\left(\frac{q_i - q_j}{\theta}\right) + \left(s_j^2 + q_j^2\right)\Phi\left(\frac{q_j - q_i}{\theta}\right) + \left(q_i + q_j\right)\theta\phi\left(\frac{q_i - q_j}{\theta}\right) - (q_z)^2$$

où :

$$\theta = \sqrt{s_i^2 + s_j^2 - 2\tau_{ij}s_i s_j},$$

$\phi(.)$ est la fonction de la densité de probabilité de la loi normale standard centrée réduite,
$\Phi(.)$ est la fonction de répartition de la loi normale standard,
$q_i$ et $q_j$ désignent respectivement lesdites moyennes de chacun desdits deux rapports signal sur interférence plus bruit déterminés à l'échelle logarithmique,
$s_i^2$ et $s_j^2$ désignent respectivement lesdites variances de chacun desdits deux rapports signal sur interférence plus bruit déterminés à l'échelle logarithmique,
$\tau_{ij}$ est ledit coefficient de corrélation entre lesdits deux rapports signal sur interférence plus bruit déterminés à l'échelle logarithmique, et
$q_z$ est ladite moyenne dudit maximum calculé.

**8.** Procédé d'estimation de paramètres caractéristiques d'une qualité de réception selon l'une quelconque des revendications 1 à 7, **caractérisé en ce que** ladite détermination (E33, E43) dudit maximum entre lesdits au moins deux rapports signal sur interférence plus bruit déterminés à l'échelle logarithmique, comprend, le cas échéant, une détermination, parmi lesdites au moins deux cellules sélectionnées, d'au moins deux cellules ayant entre elles un écart de puissance moyenne supérieur ou égal à un seuil (λ) prédéterminé.

**9.** Produit programme d'ordinateur comprenant des instructions de code de programme pour la mise en oeuvre d'un procédé selon l'une quelconque des revendications 1 à 8, lorsqu'il est exécuté par un processeur.

**10.** Procédé de planification du déploiement d'un réseau de radiocommunication cellulaire, **caractérisé en ce qu'**il met en oeuvre une estimation de paramètres caractéristiques d'une qualité de réception en une localisation dudit réseau selon l'une quelconque des revendications 1 à 8 et une détermination de paramètres de planification dudit réseau en fonction desdits paramètres caractéristiques estimés.

**11.** Procédé d'optimisation de paramètres de fonctionnement d'un réseau de radiocommunication cellulaire, **caractérisé en ce qu'**il met en oeuvre une estimation de paramètres caractéristiques d'une qualité de réception en une localisation dudit réseau selon l'une quelconque des revendications 1 à 8, et une détermination de paramètres optimisés de fonctionnement dudit réseau en fonction desdits paramètres caractéristiques estimés.

**12.** Procédé de surveillance de performance d'un réseau de radiocommunication cellulaire, **caractérisé en ce qu'**il met en oeuvre une estimation de paramètres caractéristiques d'une qualité de réception en une localisation dudit réseau selon l'une quelconque des revendications 1 à 8, et une estimation d'au moins un critère de performance dudit réseau en fonction desdits paramètres caractéristiques estimés.

**13.** Système de planification du déploiement d'un réseau de radiocommunication cellulaire, **caractérisé en ce qu'**il comprend un processeur configuré pour exécuter les étapes du procédé d'estimation de paramètres caractéristiques d'une qualité de réception en une localisation dudit réseau selon l'une quelconque des revendications 1 à 8 et pour déterminer des paramètres de planification dudit réseau en fonction desdits paramètres caractéristiques estimés.

**14.** Système d'optimisation de paramètres de fonctionnement d'un réseau de radiocommunication cellulaire, **caractérisé en ce qu'**il comprend un processeur configuré pour exécuter les étapes du procédé d'estimation de paramètres caractéristiques d'une qualité de réception en une localisation dudit réseau selon l'une quelconque des revendications 1 à 8, et pour déterminer des paramètres optimisés de fonctionnement dudit réseau en fonction desdits paramètres caractéristiques estimés.

**15.** Système (5) de surveillance de performance d'un réseau de radiocommunication cellulaire, **caractérisé en ce qu'**il comprend un processeur configuré pour exécuter les étapes du procédé d'estimation de paramètres caractéristiques d'une qualité de réception en une localisation dudit réseau de radiocommunication cellulaire selon l'une quelconque des revendications 1 à 8 et pour analyser une performance dudit réseau en fonction desdits paramètres caractéristiques estimés.

[Fig.1]

Fig. 1

[Fig.2]

Fig. 2

[Fig.3]

E31

SEL (CELL$_1$, CELL$_2$...CELL$_M$)

E32

DET (SINR$_1$, SINR$_2$...SINR$_M$)

E33

DET $SINR^{dB} =$
$\max(SINR_1^{dB}, SINR_2^{dB}, ..., SINR_{M_0}^{dB})$

E34

CALC

$q_i(SINR_1^{dB}, SINR_2^{dB}, ..., SINR_M^{dB})$

$s_i^2(SINR_1^{dB}, SINR_2^{dB}, ..., SINR_M^{dB})$

E35

DET
$E[SINR_i^{dB} \, SINR_j^{dB}]$

E36

DET COEFF CORR

E37

CALC $(q_z, s_z^2)$

Fig. 3

[Fig.4]

E41

SEL (CELL$_1$, CELL$_2$...CELL$_M$)

E42

DET (SINR$_1$, SINR$_2$...SINR$_{M0}$)

E44

CALC

$q_i(SINR_1^{dB}, SINR_2^{dB}, ..., SINR_M^{dB})$

$s_i^2(SINR_1^{dB}, SINR_2^{dB}, ..., SINR_M^{dB})$

E43

DET $SINR^{dB} =$
$\max(SINR_1^{dB}, SINR_2^{dB}, ..., SINR_{M_0}^{dB})$

E45

SEL_INTERF
DET COEFF CORR

E46

CALC $(q_z, s_z^2)$

Fig. 4

[Fig.5]

Fig. 5

[Fig.6]

Fig. 6

[Fig.7]

Fig. 7

Europäisches
Patentamt

European
Patent Office

Office européen
des brevets

# RAPPORT DE RECHERCHE EUROPEENNE

Numéro de la demande

EP 24 16 7265

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MUQAIBEL ALI H ET AL: "Practical performance evaluation of Coordinated Multi-Point (CoMP) networks", 2015 IEEE 8TH GCC CONFERENCE & EXHIBITION, IEEE, 1 février 2015 (2015-02-01), pages 1-6, XP032746524, DOI: 10.1109/IEEEGCC.2015.7060026 * abrégé * * page 3 * * figure 1 * | 1-15 | INV. H04B17/20 H04B17/26 H04B17/336 ADD. H04W16/18 H04W24/02 H04W24/08 |
| A | US 2014/099942 A1 (KIM BONG-CHAN [KR] ET AL) 10 avril 2014 (2014-04-10) * abrégé * * alinéas [0004], [0005], [0007] * * alinéas [0034] - [0039]; figure 3 * * alinéa [0062]; figure 6 * * revendication 1 * | 1-15 | |

DOMAINES TECHNIQUES RECHERCHES (IPC)

H04B
H04W

Le présent rapport a été établi pour toutes les revendications

| Lieu de la recherche | Date d'achèvement de la recherche | Examinateur |
|---|---|---|
| La Haye | 9 septembre 2024 | Yang, Betty |

**ANNEXE AU RAPPORT DE RECHERCHE EUROPEENNE
RELATIF A LA DEMANDE DE BREVET EUROPEEN NO.**

EP 24 16 7265

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-09-2024

| Document brevet cité au rapport de recherche | Date de publication | Membre(s) de la famille de brevet(s) | Date de publication |
|---|---|---|---|
| US 2014099942 A1 | 10-04-2014 | KR 20140044581 A<br>US 2014099942 A1 | 15-04-2014<br>10-04-2014 |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- SINR and rate distributions for downlink cellular networks. *IEEE Transactions on UVireless Communications,* 2020, vol. 19 (7), 4604-4616
- **X. YAN.** Downlink average rate and SINR distribution in cellular networks. *IEEE Transactions on Communications,* Février 2016, vol. 64 (2), 847-862
- SINR and rate distributions for downlink cellular networks. *IEEE Transactions on Wireless Communications,* 2020, vol. 19 (7), 4604-4616
- **S C. E. CLARK.** The greatest of a finite set of random variables. *Operations Research,* 1961, vol. 9 (2), 145-162
- **C.-L. HO.** Calculating the mean and variance of power sums with two log-normal components. *IEEE Trans. Veh. Technol.,* 1995, vol. 44 (4), 756-762
- **C. E. CLARK.** The greatest of a finite set of random variables. *Operations Research,* 1961, vol. 9 (2), 145-162
- **S. S. SZYSZKOWICZ ; H. YANIKOMEROGLU ; J. S. THOMPSON.** On the feasibility of wireless shadowing corrélation models. *IEEE Trans. Veh. Technol.,* vol. 59 (9), 4222
- **C. E. CLARK.** The greatest of a finite set of random variables,. *Operations Research,* 1961, vol. 9 (2), 145-162